# EUROPEAN PATENT SPECIFICATION

(11) **EP 2 172 103 B1**
(45) Date of publication and mention of the grant of the patent: **17.02.2016**
(21) Application number: 08017451.9
(22) Date of filing: 04.10.2008
(51) Int. Cl.: A01N 25/02, A01P 3/00, A01P 7/04, A01P 13/00

(54) **Agricultural compositions**
Landwirtschaftliche Zusammensetzungen
Compositions agricoles

(43) Date of publication of application: 07.04.2010
(73) Proprietor: Cognis IP Management GmbH, 40589 Düsseldorf (DE)
(72) Inventor: Merlet, Stéphanie, 40547 Düsseldorf (DE); Bigorra Llosas, Joaquin, 08201 Sabadell (ES)
(74) Representative: Wallon, Alexander

(56) References cited:
- EP-A- 1 205 108
- WO-A-01/43549
- WO-A-2005/023023
- US-A- 2 540 131
- US-A- 3 694 545
- US-A1- 2007 207 939
- US-A1- 2008 142 023

## Description

### Field of the invention

The present invention is related to the area of agriculture and refers more particularly to compositions comprising azole fungicides and defined green solvents showing an ester structure as defined in the claims.

### Background of the invention

Biocides, and in particular pesticides such as fungicides, insecticides and herbicides, are important auxiliary agents for agriculture in order to protect and to increase crops. Depending on the various and often very specific needs, a magnitude of actives exist, which show very different chemical structures and behaviours.

Pesticide products may be formulated as liquids, powders, or granules. Solvents, emulsifiers, dispersing agents and wetting agents are normally incorporated into such compositions in order to ensure that a uniform pesticide formulation has been prepared. Successful employment of any pesticide depends upon its proper formulation into a preparation that can be easily diluted with water into ready-to-use mixtures for application onto a targeted pest and/or agricultural substrate. The preparation and use of such formulations necessitates making them in a concentrated form. The use of solvents, emulsifiers, wetting and dispersing agents are therefore required.

In addition it is known from the state of the art that it remains difficult to prepare aqueous solutions of these actives exhibiting a satisfying stability, especially if stored over a longer time at very low or elevated temperatures. As a matter of fact, the solutions show a strong tendency to either separate or form crystals, which make it necessary to re-disperse the actives in the compositions prior to every application in order to obtain a homogenous product. Due to the fact that in spray equipments, which are customarily used for the application of aqueous formulations of plant treatment agents, several filters and nozzles are present, an additional problem appears which is related to the blocking of these filters and nozzles as a result of crystallizing active compound during the application of aqueous spray liquors based on solid active compounds. EP 1 205 108 A2 describes an emulsion comprising Tebuconazol, Propiconazol, a specific phenol/styrol-polyglycolether and an organic solvent.

Finally, conventionally used solvents/carriers for pesticides include, among others, isophorone, methylisobutylketone and N-methylpyrrolidone. These solvents become more and more undesirable due to their inherent toxicity and regulatory status. Consequently, there is a continued need in pesticide industry to find alternatives to the currently used solvent/carrier systems.

The object of this invention has been to identify new green solvents and green solvents synergistic mixtures for developing new stable, homogeneous and well emulsifiable biocide compositions.

### Detailed description of the invention

The present invention refers to new agricultural compositions comprising
(a) azole fungicides,
(b) monopropylenglycol esters, and optionally
(c) oil components and/or co-solvents and/or
(d) emulsifiers.

Surprisingly it has been observed that monopropylenglycol esters in general and species derived from C₂ to C₁₀ mono or dicarboxylic acids fatty acids or benzoic acid in particular show more appropriate solvent properties for azole fungicides and more preferably tebuconazole than other solvents from the state of the art, like e.g. methyl esters or alcohols. Adding co-solvents, especially those having an adipate or amide structure to the composition lead to emulsifiable concentrate formulations showing increased emulsion behaviour and stability, in particular with respect to opacity, layering and crystal inhibition.

In a preferred embodiment of the present invention said biocide is tebuconazole.

### Monopropylenglycol esters (MPGE)

Monopropylenglycol esters (compound b) which are useful as solvents according to the present invention are non-water soluble or partially water soluble and preferably follow general formula (I)

R¹CO-OCH₂CH(OH)CH₃ (I)

in which R¹ stands for a linear or branched, saturated or unsaturated, aliphatic or aromatic, optionally hydroxy substituted acyl radical having 2 to 22, preferably either 2 to 6, 6 to 10 or 12 to 18 carbon atoms. Typical examples of suitable MPGE's are those species obtained from lactic acid, acetic acid, propanoic acid, butanoic acid, pentanoic acid, capronic acid, caprylic acid, caprinic acid, lauric acid, myristic acid, palmitic acid, palmoleic acid, stearic acid, isostearic acid, oleic acid, elaidinic acid, linolic acid, linoleic acid, conjugated linoleic acid (CLA), 12-hydroxy stearic acid, ricinoleic acid, gadoleic acid, arachidonic acid, behenic acid, erucic acid and their technical mixtures, like for example palmoil fatty acid or tallow fatty acid. Also suitable are MGPE's based on aromatic monocarboxylic acids like for example benzoic acid.

In another preferred embodiment the MPGE's can also be derived from dicarboxylic acids, following the general formula (II)

CH₃(HO)CHCH₂O-OC-[CH₂]ₙCO-OCH₂CH(OH)CH₃ (II)

in which n stands for 0 or an integer of 1 to 10. Typical examples are species obtained from adipic acid. It is also possible to use MPGE's obtained from unsaturated dicarboxylic acids like maleic or fumaric acid or hydroxycarboxylic acids like malic, tartaric or citric acid. The esters may be obtained from reacting the acids with propylenglycol or by adding about 1 Mol of propyleneoxide; in this case the products may show a distribution of species having also higher degrees of propoxylation.

### Oil components / co-solvents

Suitable oil components - acting also as co-solvents - (compound c) are, for example, Guerbet alcohols based on fatty alcohols having 6 to 18, preferably 8 to 10, carbon atoms, esters of linear C₆-C₂₂-fatty acids with linear or branched C₆-C₂₂-fatty alcohols or esters of branched C₆-C₁₃-carboxylic acids with linear or branched C₆-C₂₂-fatty alcohols, such as, for example, myristyl myristate, myristyl palmitate, myristyl stearate, myristyl isostearate, myristyl oleate, myristyl behenate, myristyl erucate, cetyl myristate, cetyl palmitate, cetyl stearate, cetyl isostearate, cetyl oleate, cetyl behenate, cetyl erucate, stearyl myristate, stearyl palmitate, stearyl stearate, stearyl isostearate, stearyl oleate, stearyl behenate, stearyl erucate, isostearyl myristate, isostearyl palmitate, isostearyl stearate, isostearyl isostearate, isostearyl oleate, isostearyl behenate, isostearyl oleate, oleyl myristate, oleyl palmitate, oleyl stearate, oleyl isostearate, oleyl oleate, oleyl behenate, oleyl erucate, behenyl myristate, behenyl palmitate, behenyl stearate, behenyl isostearate, behenyl oleate, behenyl behenate, behenyl erucate, erucyl myristate, erucyl palmitate, erucyl stearate, erucyl isostearate, erucyl oleate, erucyl behenate and erucyl erucate. Also suitable are esters of linear C₆-C₂₂-fatty acids with branched alcohols, in particular 2-ethylhexanol, esters of C₁₈-C₃₈- alkylhydroxy carboxylic acids with linear or branched C₆-C₂₂-fatty alcohols, in particular Dioctyl Malate, esters of linear and/or branched fatty acids with polyhydric alcohols (such as, for example, propylene glycol, dimerdiol or trimertriol) and/or Guerbet alcohols, triglycerides based on C₆-C₁₀-fatty acids, liquid mono-/di-/tuglyceride mixtures based on C₆-C₁₈-fatty acids, esters of C₆-C₂₂-fatty alcohols and/or Guerbet alcohols with aromatic carboxylic acids, in particular benzoic acid, esters of C₂-C₁₂-dicarboxylic acids with linear or branched alcohols having 1 to 22 carbon atoms (Cetiol^{®} B)or polyols having 2 to 10 carbon atoms and 2 to 6 hydroxyl groups, vegetable oils, branched primary alcohols, substituted cyclohexanes, linear and branched C₆-C₂₂-fatty alcohol carbonates, such as, for example, Dicaprylyl Carbonate (Cetiol® CC), Guerbet carbonates, based on fatty alcohols having 6 to 18, preferably 8 to 10, carbon atoms, esters of benzoic acid with linear and/or branched C₆-C₂₂-alcohols (e.g. Cetiol® AB), linear or branched, symmetrical or asymmetrical dialkyl ethers having 6 to 22 carbon atoms per alkyl group, such as, for example, dicaprylyl ether (Cetiol^{®} OE), ring-opening products of epoxidized fatty acid esters with polyols, silicone oils (cyclomethicones, silicone methicone grades, etc.), aliphatic or naphthenic hydrocarbons, such as, for example, squalane, squalene or dialkylcyclohexanes, and/or mineral oils. The preferred oil components / co-solvents show either an ester or amide structure preferably adipates (Cetiol^{®} B, Agnique^{®} DiME 6), methyl esters of vegetable oils (Agnique^{®} ME 18RD-F, Agnique^{®} ME 12C-F), or fatty acid alkyl amides or alkanol amides (all products of Cognis GmbH, Düsseldorf)

### Emulsifiers

Suitable emulsifiers include non-ionic and anionic surfactants and their mixtures. Non-ionic surfactants include for example:
∘ products of the addition of 2 to 30 mol ethylene oxide and/or 0 to 5 mol propylene oxide onto linear C₈₋₂₂ fatty alcohols, onto C₁₂₋₂₂ fatty acids and onto alkyl phenols containing 8 to 15 carbon atoms in the alkyl group;
∘ C_{12/18} fatty acid monoesters and diesters of addition products of 1 to 30 mol ethylene oxide onto glycerol;
∘ glycerol mono- and diesters and sorbitan mono- and diesters of saturated and unsaturated fatty acids containing 6 to 22 carbon atoms and ethylene oxide addition products thereof;
∘ addition products of 15 to 60 mol ethylene oxide onto castor oil and/or hydrogenated castor oil;
∘ polyol esters and, in particular, polyglycerol esters such as, for example, polyglycerol polyricinoleate, polyglycerol poly-12-hydroxystearate or polyglycerol dimerate isostearate. Mixtures of compounds from several of these classes are also suitable;
∘ addition products of 2 to 15 mol ethylene oxide onto castor oil and/or hydrogenated castor oil;
∘ partial esters based on linear, branched, unsaturated or saturated C_{6/22} fatty acids, ricinoleic acid and 12-hydroxystearic acid and glycerol, polyglycerol, pentaerythritol, dipentaerythritol, sugar alcohols (for example sorbitol), alkyl glucosides (for example methyl glucoside, butyl glucoside, lauryl glucoside) and polyglucosides (for example cellulose);
∘ mono-, di and trialkyl phosphates and mono-, di- and/or tri-PEG-alkyl phosphates and salts thereof;
∘ wool wax alcohols;
∘ polysiloxane/polyalkyl polyether copolymers and corresponding derivatives;
∘ mixed esters of pentaerythritol, fatty acids, citric acid and fatty alcohol and/or mixed esters of C₆₋₂₂ fatty acids, methyl glucose and polyols, preferably glycerol or polyglycerol,
∘ polyalkylene glycols and
∘ glycerol carbonate.

The addition products of ethylene oxide and/or propylene oxide onto fatty alcohols, fatty acids, alkylphenols, glycerol mono- and diesters and sorbitan mono- and diesters of fatty acids or onto castor oil are known commercially available products. They are homologue mixtures of which the average degree of alkoxylation corresponds to the ratio between the quantities of ethylene oxide and/or propylene oxide and substrate with which the addition reaction is carried out. C_{12/18} fatty acid monoesters and diesters of addition products of ethylene oxide onto glycerol are known as lipid layer enhancers for cosmetic formulations. The preferred emulsifiers are described in more detail as follows:

### Sorbitan esters and ethoxylated sorbitan esters

Suitable sorbitan esters are sorbitan monolaurate, monoisostearate, sorbitan sesquiisostearate, sorbitan diisostearate, sorbitan triisostearate, sorbitan monooleate, sorbitan sesquioleate, sorbitan dioleate, sorbitan trioleate, sorbitan monoerucate, sorbitan sesquierucate, sorbitan dierucate, sorbitan trierucate, sorbitan monoricinoleate, sorbitan sesquiricinoleate, sorbitan diricinoleate, sorbitan triricinoleate, sorbitan monohydroxystearate, sorbitan sesquihydroxystearate, sorbitan dihydroxystearate, sorbitan trihydroxystearate, sorbitan monotartrate, sorbitan sesquitartrate, sorbitan ditartrate, sorbitan tritartrate, sorbitan monocitrate, sorbitan sesquicitrate, sorbitan dicitrate, sorbitan tricitrate, sorbitan monomaleate, sorbitan sesquimaleate, sorbitan dimaleate, sorbitan trimaleate and technical mixtures thereof. Addition products of 1 to 30 and preferably 5 to 20 moles ethylene oxide onto the sorbitan esters mentioned are also particularly efficient.

### Polyglycerol esters

Typical examples of suitable polyglycerol esters are Polyglyceryl-2 Dipolyhydroxystearate (Dehymuls^{®} PGPH), Polyglycerin-3-Diisostearate (Lameform^{®} TGI), Polyglyceryl-4 Isostearate (Isolan^{®} GI 34), Polyglyceryl-3 Oleate, Diisostearoyl Polyglyceryl-3 Diisostearate (Isolan^{®} PDI), Polyglyceryl-3 Methylglucose Distearate (Tego Care^{®} 450), Polyglyceryl-3 Beeswax (Cera Bellina^{®}), Polyglyceryl-4 Caprate (Polyglycerol Caprate T2010/90), Polyglyceryl-3 Cetyl Ether (Chimexane^{®} NL), Polyglyceryl-3 Distearate (Cremophor^{®} GS 32) and Polyglyceryl Polyricinoleate (Admul^{®} WOL 1403), Polyglyceryl Dimerate Isostearate and mixtures thereof. Examples of other suitable polyolesters are the mono-, di- and triesters of trimethylol propane or pentaerythritol with lauric acid, cocofatty acid, tallow fatty acid, palmitic acid, stearic acid, oleic acid, behenic acid and the like optionally reacted with 1 to 30 mol ethylene oxide.

### Alkoxylated vegetable oils

Suitable emulsifiers are castor oil, rape seed oil, soy been oil ethoxylated with 3 to 80 moles ethylene oxide (Agnique CSO 35, Agnique SBO 10, Agnique SBO 60))

### Alkoxylated copolymers

Typical copolymers are ethoxylated and propoxylated block and/or random polymers of C₂-C₂₂ linear or branched alcohols.

### Anionic emulsifiers

Suitable anionic emulsifiers are ethoxylated partial phosphate esters, alkyl sulfates, alkylethersulfates, linear alkylbenzene sulfonates, branched alkylbenzene sulfonates, alpha-olefin sulfonates or their mixtures.

### Industrial application

Depending on the nature of the biocide the products may show the following compositions:
(a) about 15 to about 65, preferably about 20 to about 60 and more preferably about 25 to about 55 % b.w. azole fungicides,
(b) about 15 to about 70, preferably about 20 to about 50 and more preferably about 25 to about 45 % b.w. monopropylenglycol esters, and optionally
(c) 0 to about 15, preferably about 1 to about 10 and more preferably about 2 to about 8 % b.w. oil components and/or co-solvents and
(d) 0 to about 15, preferably about 1 to about 12 and more preferably about 5 to about 10 % b.w. emulsifiers,
under the condition that the numbers add to 100 % b.w. The compositions are pesticides concentrates to be diluted with water to give a aqueous formulations for end-users comprising about 0.5 to about 5, preferably about 0.5 to about 1 % of the active matter represented by the concentrate.

Finally, another object of the present invention is directed to the use of monopropylenglycol esters as solvents for azole fungicides.

### Examples

### Examples 1-5, Comparative Examples C1-C5

### Solubility tests

The solubility of tebuconazole has been tested using different solvents. The results expressed as percent by weight of the biocide in 100 g of the solvent are compiled in Table 1.

**Table 1**

| Solubility of tebuconazole in various solvents | | |
|---|---|---|
| **Example** | **Solvent** | **Solubility [% b.w.]** |
| 1 | Benzoic acid mono propylene glycol esters | 30 |
| 2 | C₆ fatty acid mono propylene glycol esters | 26 |
| 3 | C₈ fatty acid mono propylene glycol esters | 23 |
| 4 | C₈-C₁₀ fatty acid mono propylene glycol esters | 22 |
| 5 | C₁₂ fatty acid mono propylene glycol esters | 16 |
| C1 | C₈-C₁₈ fatty acid alkanolamide | 20 |
| C2 | Dimethyl adipate | 19 |
| C3 | C₈-C₁₀ fatty acid methyl ester | 10 |
| C4 | C₆-C₁₂ fatty alcohol+2EO | 15 |
| C5 | Solvesso 150 | <5 |

As these examples show the defined fatty acid mono propylene glycol esters, especially MPGE's based on benzoic acid and C₈-C₁₀ fatty acid mixtures show excellent solvent properties.

### Examples 6 and 7

### Emulsification tests

In the following several emulsifiable concentrates were prepared. Characteristics of 5 % b.w. emulsions in different water hardness and stored at 20 °C for 24 h were assessed. The stability of the emulsions was determined as a function of time. As far as layering is concerned (++) means "no layering" and (+) "about 1 ml layering". For opacity (++) means opaque white emulsion and (+) a slightly opalescent emulsion. The results are compiled in Table 2.

**Table 2**

| | | |
|---|---|---|
| Compositions and performance of Tebuconazole concentrate formulation | | |

| **Examples** | **6** | **7** |
|---|---|---|
| Tebuconazole | 20.0 | 20.0 |
| Agnique^{®} MPGE 810 C₈-C₁₀ acid MPG ester | 25.0 | 25.0 |
| Agnique^{®} MPGE benz Benzoic acid MPG ester | 35.0 | 30.0 |
| C₈-C₁₈ fatty acid alkanolamide | - | 10.0 |
| Agnique DIME 6 Dimethyl adipate | 10.0 | 5.0 |
| Agnique^{®} MBL 510 H/530 B* Emulsifier | 10.0 | 10.0 |
| Water hardness | CIPAC 20 ppm | CIPAC 342 ppm |
| ***Emulsion properties*** | | |
| - spontaneously | ++ | ++ |
| - layering after 1 h | ++ | ++ |
| - opacity after 1 h | ++ | ++ |
| - layering after 2 h | + | + |
| - opacity after 2 h | ++ | ++ |
| - layering after 24 h | + | + |

| | | |
|---|---|---|
| *) Emulsifier mixture based on a blend of anionic and nonionic surfactants (Cognis GmbH, Germany) | | |

The examples indicate that excellent emulsification behaviour is obtained as a result of optimized solvents mixture and emulsifier systems.

## Claims

1. Agricultural compositions comprising
(a) Azole fungicides,
(b) Monopropylenglycol esters, and optionally
(c) Oil components and/or co- solvents and/or
(d) Emulsifiers.

2. Compositions according to Claim 1, **characterised in that** said fungicide is tebuconazole.

3. Compositions according to Claims 1 and/or 2, **characterised in that** said monopropylenglycol esters follow general formula (I),
R¹CO-OCH₂CH(OH)CH₃ (I)
in which R¹CO stands for a linear or branched, saturated or unsaturated, aliphatic or aromatic, optionally hydroxy substituted acyl radical having 2 to 22 carbon atoms.

4. Compositions according to any of the preceding Claims 1 to 3, **characterised in that** said monopropylenglycol esters follow general formula (II),
CH₃(HO)CHCH₂O-OC-[CH₂]ₙCO-OCH₂CH(OH)CH₃ (II)
in which n stands for 0 or an integer of 1 to 10.

5. Compositions according to any of the preceding Claims 1 to 4, **characterised in that** said oil components and/or co-solvents are selected from the group consisting of Guerbet alcohols based on fatty alcohols having 6 to 18 carbon atoms, esters of linear C₆-C₂₂-fatty acids with linear or branched C₆-C₂₂-fatty alcohols or esters of branched C₆-C₁₃-carboxylic acids with linear or branched C₆-C₂₂-fatty alcohols, methyl esters of C₆-C₂₂ fatty acids, esters of linear C₆-C₂₂-fatty acids with branched alcohols, esters of C₁₈-C₃₈-alkylhydroxy carboxylic acids with linear or branched C₆-C₂₂-fatty alcohols, esters of linear and/or branched fatty acids with polyhydric alcohols and/or Guerbet alcohols, triglycerides based on C₆-C₁₀-fatty acids, liquid mono-/di-/triglyceride mixtures based on C₆-C₁₈-fatty acids, esters of C₆-C₂₂-fatty alcohols and/or Guerbet alcohols with aromatic carboxylic acids, esters of C₂-C₁₂-dicarboxylic acids with linear or branched alcohols having 1 to 22 carbon atoms or polyols having 2 to 10 carbon atoms and 2 to 6 hydroxyl groups, vegetable oils, branched primary alcohols, substituted cyclohexanes, linear and branched C₆-C₂₂-fatty alcohol carbonates, Guerbet carbonates, based on fatty alcohols having 6 to 18, preferably 8 to 10, carbon atoms, esters of benzoic acid with linear and/or branched C₆-C₂₂-alcohols, linear or branched, symmetrical or asymmetrical dialkyl ethers having 6 to 22 carbon atoms per alkyl group, ring-opening products of epoxidized fatty acid esters with polyols, silicone oils and/or aliphatic or naphthenic hydrocarbons, mineral oils and their mixtures.

6. Compositions according to any of the preceding Claims 1 to 5, **characterised in that** said oil components show an ester or amide structure.

7. Compositions according to any of the preceding Claims 1 to 6, **characterised in that** said emulsifiers represent non-ionic and/or anionic surfactants.

8. Compositions according to any of the preceding Claims 1 to 7, **characterised in that** they comprise:
(a) 15 to 65 % b.w. azole fungicides,
(b) 15 to 70 % b.w. monopropylenglycol esters,
(c) 0 to 15 % b.w. oil components and/or co-solvents, and/or
(d) 0 to 15 % b.w. emulsifiers,
on condition that the numbers add to 100 % b.w.

9. Use of mixtures of monopropylenglycol esters as solvents for azole fungicides.

## Patentansprüche

1. Landwirtschaftliche Zusammensetzungen, umfassend:
(a) Azolfungizide,
(b) Monopropylenglykolester und gegebenenfalls
(c) Ölkomponenten und/oder Cosolventien und/oder
(d) Emulgatoren.

2. Zusammensetzungen nach Anspruch 1, **dadurch gekennzeichnet, dass** es sich bei dem Fungizid um Tebuconazol handelt.

3. Zusammensetzungen nach Anspruch 1 und/oder 2, **dadurch gekennzeichnet, dass** die Monopropylenglykolester die folgende allgemeine Formel (I) aufweisen
R¹CO-OCH₂CH(OH)CH₃ (I),
in welcher R¹CO für einen geradkettigen oder verzweigten, gesättigten oder ungesättigten, aliphatischen oder aromatischen, gegebenenfalls hydroxysubstituierten Acylrest mit 2 bis 22 Kohlenstoffatomen steht.

4. Zusammensetzungen nach einem der vorhergehenden Ansprüche 1 bis 3, **dadurch gekennzeichnet, dass** die Monopropylenglykolester die allgemeine Formel (II) aufweisen
CH₃(HO)CHCH₂O-OC-[CH₂]ₙCO-OCH₂CH(OH)CH₃ (II),
in welcher n für 0 oder eine ganze Zahl von 1 bis 10 steht.

5. Zusammensetzungen nach einem der vorhergehenden Ansprüche 1 bis 4, **dadurch gekennzeichnet, dass** die Ölkomponenten und/oder Cosolventien ausgewählt sind aus der Gruppe bestehend aus Guerbet-Alkoholen basierend auf Fettalkoholen mit 6 bis 18 Kohlenstoffatomen, Estern geradkettiger C₆-C₂₂-Fettsäuren mit geradkettigen oder verzweigten C₆-C₂₂-Fettalkoholen oder Estern verzweigter C₆-C₁₃-Carbonsäuren mit geradkettigen oder verzweigten C₆-C₂₂-Fettalkoholen, Methylestern von C₆-C₂₂-Fettsäuren, Estern geradkettiger C₆-C₂₂-Fettsäuren mit verzweigten Alkoholen, Estern von C₁₈-C₃₈-Alkylhydroxycarbonsäuren mit geradkettigen oder verzweigten C₆-C₂₂-Fettalkoholen, Estern geradkettiger und/oder verzweigter Fettsäuren mit mehrwertigen Alkoholen und/oder Guerbet-Alkoholen, Triglyceriden basierend auf C₆-C₁₀-Fettsäuren, flüssigen Mono-/Di-/Triglyceridmischungen basierend auf C₆-C₁₈-Fettsäuren, Estern von C₆-C₂₂-Fettalkoholen und/oder Guerbet-Alkoholen mit aromatischen Carbonsäuren, Estern von C₂-C₁₂-Dicarbonsäuren mit geradkettigen oder verzweigten Alkoholen mit 1 bis 22 Kohlenstoffatomen oder Polyolen mit 2 bis 10 Kohlenstoffatomen und 2 bis 6 Hydroxylgruppen, Pflanzenölen, verzweigten primären Alkoholen, substituierten Cyclohexanen, geradkettigen und verzweigten C₆-C₂₂-Fettalkoholcarbonaten, Guerbet-Carbonaten basierend auf Fettalkoholen mit 6 bis 18, vorzugsweise 8 bis 10, Kohlenstoffatomen, Estern von Benzoesäure mit geradkettigen und/oder verzweigten C₆-C₂₂-Alkoholen, geradkettigen oder verzweigten, symmetrischen oder asymmetrischen Dialkylethern mit 6 bis 22 Kohlenstoffatomen pro Alkylgruppe, Ringöffnungsprodukte epoxidierter Fettsäureester mit Polyolen, Silikonölen und/oder aliphatischen oder naphthenischen Kohlenwasserstoffen, Mineralölen und Mischungen davon.

6. Zusammensetzungen nach einem der vorhergehenden Ansprüche 1 bis 5, **dadurch gekennzeichnet, dass** die Ölkomponenten eine Ester- oder Amidstruktur aufweisen.

7. Zusammensetzungen nach einem der vorhergehenden Ansprüche 1 bis 6, **dadurch gekennzeichnet, dass** die Emulgatoren nichtionische und/oder anionische Tenside sind.

8. Zusammensetzungen nach einem der vorhergehenden Ansprüche 1 bis 7, **dadurch gekennzeichnet, dass** sie Folgendes umfassen:
(a) 15 bis 65 Gew.-% Azolfungizide,
(b) 15 bis 70 Gew.-% Monopropylenglykolester,
(c) 0 bis 15 Gew.-% Ölkomponenten und/oder Cosolventien und/oder
(d) 0 bis 15 Gew.-% Emulgatoren,
mit der Maßgabe, dass die Summer der Zahlen 100 Gew.-% beträgt.

9. Verwendung von Mischungen von Monopropylenglykolestern als Lösungsmittel für Azolfungizide.

## Revendications

1. Compositions agricoles comprenant
(a) des fongicides azole,
(b) des esters de monopropylèneglycol, et facultativement
(c) des composants d'huile et/ou des co-solvants et/ou
(d) des émulsifiants.

2. Compositions selon la revendication 1, **caractérisées en ce que** ledit fongicide est le tébuconazole.

3. Compositions selon les revendications 1 et/ou 2, **caractérisées en ce que** lesdits esters de monopropylèneglycol ont la formule générale (I),
R¹CO-OCH₂CH(OH)CH₃ (I)
dans laquelle R¹CO désigne un radical acyle linéaire ou ramifié, saturé ou insaturé, aliphatique ou aromatique, facultativement hydroxy-substitué ayant 2 à 22 atomes de carbone.

4. Compositions selon l'une quelconque des revendications précédentes 1 à 3, **caractérisées en ce que** lesdits esters de monopropylèneglycol ont la formule générale (II),
CH₃(HO)CHCH₂O-OC-[CH₂]ₙCO-OCH₂CH(OH)CH₃ (II)
dans laquelle n désigne 0 ou un entier de 1 à 10.

5. Compositions selon l'une quelconque des revendications précédentes 1 à 4, **caractérisées en ce que** lesdits composants d'huile et/ou co-solvants sont choisis dans le groupe constitué d'alcools de Guerbet à base d'alcools gras ayant 6 à 18 atomes de carbone, esters d'acides gras en C₆-C₂₂ linéaires avec des alcools gras en C₆-C₂₂ linéaires ou ramifiés ou esters d'acides carboxyliques en C₆-C₁₃ ramifiés avec des alcools gras en C₆-C₂₂ linéaires ou ramifiés, des esters méthyliques d'acides gras en C₆-C₂₂, des esters d'acides gras en C₆-C₂₂ linéaires avec des alcools ramifiés, des esters d'acides alkylhydroxycarboxyliques en C₁₈-C₃₈ avec des alcools gras en C₆-C₂₂ linéaires ou ramifiés, des esters d'acides gras linéaires et/ou ramifiés avec des alcools polyhydriques et/ou des alcools de Guerbet, des triglycérides à base d'acides gras en C₆-C₁₀, des mélanges de mono-/di-/triglycérides liquides à base d'acides gras en C₆-C₁₈, des esters d'alcools gras en C₆-C₂₂ et/ou des alcools de Guerbet avec des acides carboxyliques aromatiques, des esters d'acides dicarboxyliques en C₂-C₁₂ avec des alcools linéaire ou ramifiés ayant 1 à 22 atomes de carbone ou des polyols ayant 2 à 10 atomes de carbone et 2 à 6 groupes hydroxyle, des huiles végétales, des alcools primaires ramifiés, des cyclohexanes substitués, des carbonates d'alcools gras en C₆-C₂₂ linéaires et ramifiés, des carbonates de Guerbet, à base d'alcools gras ayant 6 à 18, de préférence 8 à 10, atomes de carbone, des esters d'acide benzoïque avec des alcools en C₆-C₂₂ linéaires et/ou ramifiés, des éthers dialkyliques linéaires ou ramifiés, symétriques ou asymétriques ayant 6 à 22 atomes de carbone par groupe alkyle, des produits d'ouverture de cycle d'esters d'acide gras époxydé avec des polyols, des huiles silicone et/ou des hydrocarbures aliphatiques ou naphténiques, des huiles minérales et leurs mélanges.

6. Compositions selon l'une quelconque des revendications précédentes 1 à 5, **caractérisées en ce que** lesdits composants d'huile présentent une structure d'ester ou d'amide.

7. Compositions selon l'une quelconque des revendications précédentes 1 à 6, **caractérisées en ce que** lesdits émulsifiants représentent des tensioactifs non ioniques et/ou anioniques.

8. Compositions selon l'une quelconque des revendications précédentes 1 à 7, **caractérisées en ce qu'**elles comprennent :
(a) 15 à 65 % en poids de fongicides azole,
(b) 15 à 70 % en poids d'esters de monopropylèneglycol,
(c) 0 à 15 % en poids de composants d'huile et/ou co-solvants, et/ou
(d) 0 à 15 % en poids d'émulsifiants,
à condition que la somme des valeurs soit de 100 % en poids.

9. Utilisation de mélanges d'esters de monopropylèneglycol en tant que solvants pour les fongicides azole.
